# EUROPEAN PATENT APPLICATION

(11) **EP 4 265 941 A1**
(43) Date of publication of application: **25.10.2023**
(21) Application number: 22207799.2
(22) Date of filing: 16.11.2022
(51) Int. Cl.: F16H 61/32, F16H 63/24, F16H 63/18, F16H 61/28

(54) **GEAR SELECTOR DRUM ARRANGEMENT**

(71) Applicant: VOLVO TRUCK CORPORATION, 405 08 Göteborg (SE)
(72) Inventor: GRYNBERG, Philippe, 69600 OULLINS (FR)
(74) Representative: Germain Maureau

(57) **Abstract**

The invention relates to gear selector drum arrangement (100), comprising:
- a rotary drive (101) having a motor shaft (102),
- at least two selector drums (103, 104), respectively a first selector drum (103) and a second selector drum (104), which are drivingly connected to the motor shaft (102),
wherein the first selector drum (103) is drivingly connected to the motor shaft (102) either directly or via a first set of gears (105) and the second selector drum (104) is drivingly connected to the motor shaft (102) via a second set of gears (106), the first set of gears (105) and the second set of gears (106) having a different gear ratio, the first and second selector drums (103, 104) rotating at different speeds.

## Description

### TECHNICAL FIELD

The disclosure relates generally to a gearbox for a motor vehicle. In particular aspects, the disclosure relates to a gear selector arrangement. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Electric vehicles including hybrids and all electric vehicles are becoming a larger percentage of a global automotive market. Electric vehicle sales are expected to grow due to emissions regulations and the improvement in the driving range and batteries of such vehicles.

Electric drive axles or e-axles may be utilized to drive the front, rear or both axles of a vehicle. E-axles may be utilized in a rear axle of a hybrid vehicle which is typically a front wheel drive vehicle to provide all wheel drive capability.

E-axles generally include a multi-ratio gearbox coupled the driving shaft of an electric motor and gear change mechanisms that are adapted to select specific gear ratios of the multi-ratio gearbox. Such gear change mechanisms may include sliding dog clutches that selectively engage or disengage the driven gears of the multi-ratio gearbox. The actuation of said dog clutches can be done by a plurality of selector drums having a specific actuating contour on their outer circumferential surface and by a plurality of shift members interacting with said actuating contour to change the axial position of the dog clutches.

The selector drums are generally driven by pneumatic actioners, one pneumatic actioner driving only one selector drum. However, this known solution is not satisfactory in terms of compactness and in terms of ease of installation.

There is a need in the art for a gear selector drum arrangement that is compact and easy to install in a vehicle. There is a further need for a gear selector drum arrangement that provides various speeds or gear ratios to improve the function of the e-axle under various driving conditions and loads.

### SUMMARY

According to a first aspect of the disclosure, the disclosure relates to gear selector drum arrangement, comprising:
- a rotary drive having a motor shaft,
- at least two selector drums, respectively a first selector drum and a second selector drum, which are drivingly connected to the motor shaft,
   the first selector drum being drivingly connected to the motor shaft either directly or via a first set of gears and the second selector drum being drivingly connected to the motor shaft via a second set of gears, the first set of gears and the second set of gears having a different gear ratio, the first and second selector drums rotating at different speeds. The first aspect of the disclosure may seek to improve the compactness of the gear selector arrangement. A technical benefit may include the use of one rotary drive for driving two selector drums. Thus configured, the gear selector drum arrangement is of simple construction. Furthermore, when the rotary drive is an electric motor, the gear selector drum arrangement is well adapted for an electric drive axle.

In some examples, the first selector drum has a first actuating contour on its outer circumferential surface for shifting a first shift member.

In some examples, the second selector drum has a second actuating contour on its outer circumferential surface for shifting a second shift member.

In some examples, the first actuating contour consists in a cam groove formed inside the outer circumferential surface of the first selector drum.

In some examples, the second actuating contour consists in a cam groove formed inside the outer circumferential surface of the second selector drum.

In some examples, the first shift member includes a first follower pin engaging in the cam groove of the first selector drum and a first shift fork, which is adapted to engage with a first clutch. Thus configured, the first shift member allows actuating the first clutch to rotatably couple/decouple the driving shaft of an electric motor with an input shaft of a multi-ratio gearbox.

In some examples, the second shift member includes a second follower pin engaging in the cam groove of the second selector drum and a second shift fork, which is adapted to engage with a second clutch. Thus configured, the second shift member allows actuating the second clutch to rotatably couple/decouple the driving shaft of an electric motor with an input shaft of a multi-ratio gearbox.

In some examples, the cam groove of the first selector drum is divided into a plurality of areas, each area corresponding to a specific axial position of the first clutch. Thus configured, the first selector drum permits to move the first clutch into several specific axial positions when the rotary drive rotates about the motor shaft.

In some examples, the cam groove of the second selector drum is divided into a plurality of areas, each area corresponding to a specific axial position of the second clutch. Thus configured, the second selector drum permits to move the second clutch into several specific axial positions when the rotary drive rotates about the motor shaft.

In some examples, the gear ratio of the first set of gears is 1 and the gear ratio of the second set of gears is 1/2. Thus configured, the first and second selector drums permit to move the first and second clutches into several axial positions when the rotary drive rotates about the motor shaft, the specific axial positions of the first clutch being repeated at least twice for each 360° rotation of the second selector drum, thus defining various gear ratios of a multi-ratio gearbox.

In some examples, the rotary drive is an electric motor.

According to a second aspect of the disclosure, the disclosure relates to an electric axle assembly comprising:
- at least one electric motor having a driving shaft,
- a multi-ratio gearbox comprising at least an input shaft and an output shaft, the multi-ratio gearbox having several selectable gear ratios,
- at least one first clutch and at least one second clutch, the first and second clutches being configured to rotatably couple/decouple the driving shaft with the input shaft,
- the gear selector drum arrangement according to any of the embodiments set forth herein above, the gear selector arrangement actuating the first and second clutches to select a specific gear ratio of the multi-ratio gearbox.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a perspective view of a vehicle comprising an electric axle assembly according to one example.
**FIG. 2** is a schematic representation of an electric axle assembly comprising a gear selector drum arrangement according to a first embodiment.
**FIG. 3** is a schematic representation of a gear selector drum arrangement according to a second embodiment.
**FIG. 4** is a schematic representation of a gear selector drum arrangement according to a third embodiment.

### DETAILED DESCRIPTION

Aspects set forth below represent the necessary information to enable those skilled in the art to practice the disclosure.

The present description is given in an X, Y, Z referential where X is defined as the longitudinal direction of the vehicle 1, Y is defined as the transversal direction and Z is defined as the vertical direction of the vehicle 1.

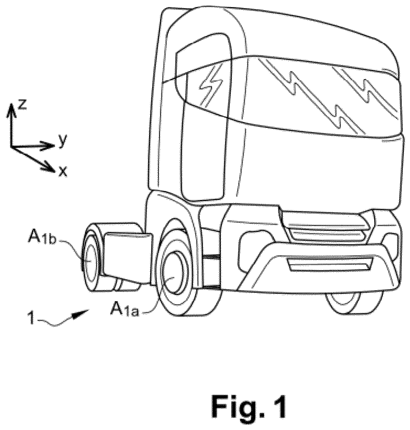

**FIG. 1** shows a vehicle, which is an electric, fuel cell or hybrid vehicle, i.e. a vehicle using electric energy as a source of power. In the example, the vehicle is a truck 1, comprising two axles A1a and A1b, respectively a front axle A1a and a rear axle A1b.

In an alternative embodiment, the vehicle may include one or more front and/or rear axle(s). Each axle can alternatively be none driven or driven axle(s).

At least one of the two axles A1a and A1b is motorized, i.e. includes at least one electric motor. In the example, we consider that only the rear axle A1b is motorized, i.e. vehicle 1 is a propulsion vehicle (in which only the rear axle(s) is/are motorized). However, the invention obviously also applies to all-wheel drive vehicles and to traction vehicles (in which only the front axle(s) is/are motorized).

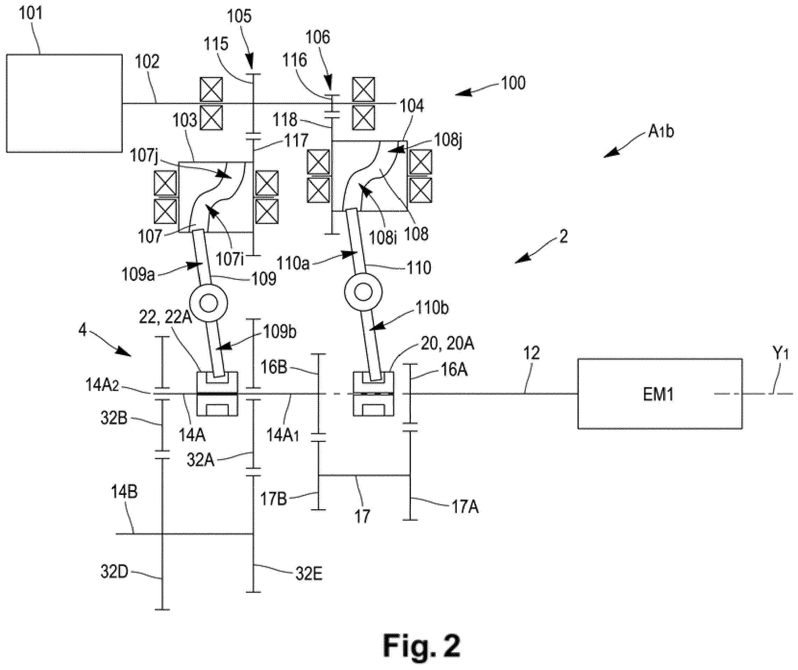

As illustrated in **FIG. 2****,** Axle A1b may include a powertrain 2, comprising at least one electric motor (or "E-motor") EM1 having a driving shaft 12. In other examples (not shown), Axle A1b may comprise two electric motors that are identical in that they have the same characteristics (supply voltage, operating current, torque-speed characteristic, mechanical power, etc.). For example, the mechanical power of EM1 is between 50kW to 500kw. Alternatively, the two motors EM1 and EM2 can be different.

Advantageously, the electric motor EM1 is AC type motor (synchronous or asynchronous). Alternatively, the electric motor EM1 could be DC type motors as well (brushed). More generally, any electric motor is suitable.

The electric powertrain 2 may comprise a multi-ratio gearbox 4 including at least a (first) input shaft 14A and an output shaft 14B. The electric powertrain 2 may comprise a differential assembly (not shown) mechanically connected to the output shaft 14B.

The multi-ratio gearbox 4 may comprise a first clutch 20 configured to rotatably couple/decouple the driving shaft 12 with the input shaft 14A. The multi-ratio gearbox 4 may comprise a second clutch 22 configured to rotatably couple/decouple the input shaft 14A with the output shaft 14B. The first and or second clutches 20, 22 may each be a dog clutch.

In the present example, the input shaft 14A may extend along an axis Y1 between a first axial end 14A1 and a second axial end 14A2. The driving shaft 12 may be coupled to the input shaft 14A at the first axial end 14A1. In the present example, the driving shaft 12 and the input shaft 14A may be coaxial. The output shaft 14B may be parallel to the input shaft 14A.

The driving shaft 12 and the input shaft 14A may be coaxial and the multi-ratio gearbox 4 may comprises a (first) driving gear 16A rotatably coupled to and coaxial with the driving shaft 12, an input gear 16B (or input idle gear 16B, coaxial with the input shaft 14A) configured to be rotatably coupled/decoupled to/from the input shaft 14A, and a countershaft 17 bearing a first counter gear 17A meshed with the driving gear 16A and a second counter gear 17B meshed with the input gear 16B. The first clutch 20 may comprise a first movable member 20A which is axially movable along the axis Y1 between a first coupling position (not shown, first movable member 20A to the right in figure 2) wherein input gear 16B is decoupled from the input shaft 14A and the driving shaft 12 is directly rotatably coupled with the input shaft 14A, a second coupling position (not shown, first movable member 20A to the left in figure 2) wherein the input gear 16B is coupled to the input shaft 14A so that the driving shaft 12 is rotatably coupled with the input shaft 14A only via the countershaft 17 and the first and second counter gears 17A, 17B, and a neutral position (shown in figure 2) wherein the driving shaft 12 and the input shaft 14A are free to rotate relative to each other.

The multi-ratio gearbox 4 may comprise a first gear 32A (or first idle gear 32A, coaxial with the input shaft 14A) configured to be rotatably coupled/decoupled to/from the input shaft 14A and a second gear 32B (or second idle gear 32B, coaxial with the input shaft 14A) configured to be rotatably coupled/decoupled to/from the input shaft 14A. The second clutch 22 may comprise a second movable member 22A which is axially movable along the axis Y1 between a first coupling position (not show, second movable member 22A to the right in figure 2) wherein the first gear 32A is coupled to the input shaft 14A and the second gear 32B is decoupled from the input shaft 14A, a second coupling position (not show, second movable member 22A to the left in figure 2) wherein the second gear 32B is coupled to the input shaft 14A and the first gear 32A is decoupled from the input shaft 14A, and a neutral position (shown in figure 2) wherein both the first gear 32A and the second gear 32B are decoupled from the input shaft 14A.

The output shaft 14B may bear a third gear 32D meshed with the second gear 32B, a fourth gear 32E meshed with the first gear 32A, and an output gear (not shown) meshed with the differential assembly (not shown). The differential assembly of the present example is well known by the skilled person and is not described with more detail.

Due to the above-described structure, the electric powertrain 2 may adopt many different configurations with different speed ratios.

In particular, the first clutch 20 (or the first movable member 20A) may be in its first coupling, second coupling or neutral position, and the second clutch 22 (or the second movable member 2A) may be in its first coupling, second coupling or neutral position. Each position of the first and second clutches 20, 22 corresponds to a specific gear ratio of the multi-ratio gearbox 4.

The axle A1b comprises a gear selector arrangement 100 that is adapted to move the first and second clutches 20, 22 in one of their first coupling, second coupling and neutral positions. The gear selector drum arrangement 100 comprises a rotary drive 101 having a motor shaft 102, at least two selector drums, respectively a first selector drum 103 and a second selector drum 104, which are drivingly connected to the motor shaft 102. The rotary drive 101 may advantageously consist in an electric motor.

In the embodiment illustrated in **FIG. 2****,** the first selector drum 103 is drivingly connected to the motor shaft 102 via a first set of gears 105 and the second selector drum 104 is drivingly connected to the motor shaft 102 via a second set of gears 106. The first set of gears 105 consists in a first pinion 117 that is fixed in rotation on the first selector drum 103, said first pinion 117 meshing with a pinion 115 that is fixed in rotation on the motor shaft 102. The second set of gears 106 consists in a second pinion 118 that is fixed in rotation on the second selector drum 104, said second pinion 118 meshing with a pinion 116 that is fixed in rotation on the motor shaft 102. The diameters of the first and second pinions 117, 118 may be the same and the diameters of the pinions 115, 116 may be different. Accordingly, the first set of gears 105 and the second set of gears 106 may have a different gear ratio. Therefore, the first and second selector drums 103, 104 may rotate at different speeds.

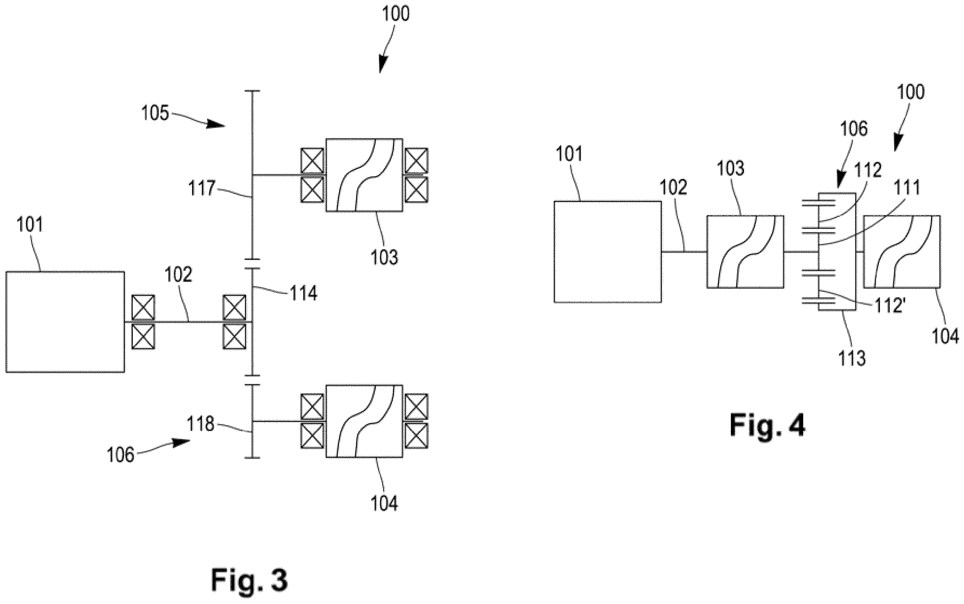

In the alternative embodiment illustrated in **FIG. 3****,** the first selector drum 103 is drivingly connected to the motor shaft 102 via a first set of gears 105 and the second selector drum 104 is drivingly connected to the motor shaft 102 via a second set of gears 106. The first set of gears 105 consists in a first pinion 117 that is fixed in rotation on the first selector drum 103, said first pinion 117 meshing with a pinion 114 that is fixed in rotation on the motor shaft 102. The second set of gears 106 consists in a second pinion 118 that is fixed in rotation on the second selector drum 104, said second pinion 118 meshing also with the pinion 114. The diameters of the first and second pinions 117, 118 may be different. Accordingly, the first set of gears 105 and the second set of gears 106 may have a different gear ratio. Therefore, the first and second selector drums 103, 104 may rotate at different speeds.

In the alternative embodiment illustrated in **FIG. 4****,** the first selector drum 103 is directly connected to the motor shaft 102 and the second selector drum 104 is drivingly connected to the motor shaft 102 via a set of gears 106. The set of gears 106 consists in a pinion 111 that is fixed in rotation on the first selector drum 103, said first pinion 111 meshing with first and second toothed wheels 112, 112', said toothed wheels 112, 112' meshing with an internally threaded crown 113 that is fixed in rotation on the second selector drum 104. The set of gears 106 may have a gear ratio that different from 1. Therefore, the first and second selector drums 103, 104 may rotate at different speeds.

The first selector drum 103 has a first actuating contour 107 on its outer circumferential surface for shifting a first shift member 109 and the second selector drum 104 has a second actuating contour 108 on its outer circumferential surface for shifting a second shift member 110. In one exemplary embodiment, the first actuating contour 107 may consist in a cam groove formed inside the outer circumferential surface of the first selector drum 103 and the second actuating contour 108 may consist in a cam groove formed inside the outer circumferential surface of the second selector drum 104. In one exemplary embodiment, the first shift member 109 may include a first follower pin 109a engaging in the cam groove 107 of the first selector drum 103 and a first shift fork 109b, which is adapted to engage with the clutch 22, and the second shift member 110 may include a second follower pin 110a engaging in the cam groove 108 of the second selector drum 104 and a second shift fork 110b which is adapted to engage with the clutch 20.

The cam groove 109 of the first selector drum 103 may be divided into a plurality of areas 107i, 107j, each area corresponding to a specific axial position of the clutch 22 along the axis Y1, and the cam groove 108 of the second selector drum 104 is divided into a plurality of areas 108i, 108j, each area corresponding to a specific axial position of the second clutch 20 along the axis Y1.

In one exemplary embodiment, the gear ratio of the first set of gears 105 may be 1 and the gear ratio of the second set of gears 106 is 1/2. In this specific case, the cam groove 109 of the first selector drum 103 may divided into five areas in the circumferential direction, respectively a first area from 0° to 30° corresponding the neutral position of the clutch 22, a second area from 30° to 150° corresponding to the first coupling position of the clutch 22, a third area from 150° to 210° corresponding to the neutral position of the clutch 22, a fourth area from 210° to 330° corresponding to the second coupling of the clutch 22, and a fifth position from 330° to 360° corresponding to the neutral position of the clutch 22. And, in this specific case, the cam groove 110 of the second selector drum 104 may divided into four areas in the circumferential direction, respectively a first area from 0° to 90° corresponding the neutral position of the clutch 20, a second area from 90° to 180° corresponding to the first coupling position of the clutch 20, a third area from 180° to 270° corresponding to the neutral position of the clutch 20, and a fourth area from 270° to 360° corresponding to the second coupling of the clutch 20. Thus configured, the gear selector arrangement 100 is adapted to define various gear ratios of the first set of gears 105 and the second set of gears 106 when the motor shaft 102 rotates from 0° to 360°.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A gear selector drum arrangement (100), comprising:
- a rotary drive (101) having a motor shaft (102),
- at least two selector drums (103, 104), respectively a first selector drum (103) and a second selector drum (104), which are drivingly connected to the motor shaft (102),
**characterized in that** the first selector drum (103) is drivingly connected to the motor shaft (102) either directly or via a first set of gears (105) and the second selector drum (104) is drivingly connected to the motor shaft (102) via a second set of gears (106), the first set of gears (105) and the second set of gears (106) having a different gear ratio, the first and second selector drums (103, 104) rotating at different speeds.

2. The gear selector drum arrangement (100) of claim 1, **characterized in that** the first selector drum (103) has a first actuating contour (107) on its outer circumferential surface for shifting a first shift member (109).

3. The gear selector drum arrangement (100) of claim 2, **characterized in that** the second selector drum (104) has a second actuating contour (108) on its outer circumferential surface for shifting a second shift member (110).

4. The gear selector drum arrangement (100) of claim 2 or claim 3, **characterized in that** the first actuating contour (107) consists in a cam groove formed inside the outer circumferential surface of the first selector drum (103)

5. The gear selector drum arrangement (100) of claim 3 or claim 4 when dependent of claim 3, **characterized in that** the second actuating contour (108) consists in a cam groove formed inside the outer circumferential surface of the second selector drum (104).

6. The gear selector drum arrangement (100) of any claims 2-5, **characterized in that** the first shift member (109) includes a first follower pin (109a) engaging in the cam groove (107) of the first selector drum (103) and a first shift fork (109b), which is adapted to engage with a first clutch (22).

7. The gear selector drum arrangement (100) of claim 3 or any claims 4-6 when dependent of claim 3, **characterized in that** the second shift member (110) includes a second follower pin (110a) engaging in the cam groove (108) of the second selector drum (104) and a second shift fork (110b) which is adapted to engage with a second clutch (20).

8. The gear selector drum arrangement (100) of claim 4 or any claims 5-7 when dependent of claim 4, **characterized in that** the cam groove (107) of the first selector drum (103) is divided into a plurality of areas (107i, 107j), each area corresponding to a specific axial position of the first clutch (22)

9. The gear selector drum arrangement (100) of claim 5 or any claims 6-8 when dependent of claim 5, **characterized in that** the cam groove (108) of the second selector drum (104) is divided into a plurality of areas (108i, 108j), each area corresponding to a specific axial position of the second clutch (20).

10. The gear selector drum arrangement (100) of any claims 1-9, **characterized in that** the gear ratio of the first set of gears (105) is 1 and the gear ratio of the second set of gears (106) is 1/2.

11. The gear selector drum arrangement (100) of any claims 1-10, **characterized in that** the rotary drive (101) is an electric motor.

12. An electric axle assembly (A1b) for vehicle (1) comprising:
- at least one electric motor (EM1) having a driving shaft (12),
- a multi-ratio gearbox (4) comprising at least an input shaft (14A) and an output shaft (14B), the multi-ratio gearbox (4) having several selectable gear ratios,
- at least one first clutch (22) and at least one second clutch (20), the first and second clutches (20, 22) being configured to rotatably couple/decouple the driving shaft (12) with the input shaft (14A),
- the gear selector drum arrangement (100) according to any of claims 1-11, the gear selector arrangement (100) actuating the first and second clutches (20, 22) to select a specific gear ratio of the multi-ratio gearbox (4).
